# EUROPÄISCHE PATENTSCHRIFT

(11) **EP 2 459 612 B1**
(45) Veröffentlichungstag und Bekanntmachung des Hinweises auf die Patenterteilung: **03.04.2019**
(21) Anmeldenummer: 10729842.4
(22) Anmeldetag: 29.06.2010
(51) Int. Cl.: C08G 18/61, C08G 77/46, C08L 83/12, C08J 9/00

(54) **VERFAHREN ZUR HERSTELLUNG VON POLYURETHANSCHAUM**
METHOD FOR PRODUCING POLYURETHANE FOAM
PROCÉDÉ POUR PRODUIRE DE LA MOUSSE DE POLYURÉTHANE

(30) Priorität: 29.07.2009 DE 102009028061
(43) Veröffentlichungstag der Anmeldung: 06.06.2012
(73) Patentinhaber: Evonik Degussa GmbH, 45128 Essen (DE)
(72) Erfinder: GLOS, Martin, 46325 Borken (DE); SCHILLER, Carsten, 45470 Mülheim an der Ruhr (DE); EILBRACHT, Christian, 44627 Herne (DE)
(74) Vertreter: Evonik Patent Association
(86) Internationale Anmeldenummer: PCT/EP2010/059190
(87) Internationale Veröffentlichungsnummer: WO 2011/012390

(56) Entgegenhaltungen:
- EP-A1- 1 211 279
- EP-A1- 1 520 870
- WO-A1-2009/089400
- WO-A2-2007/053670
- WO-A2-2009/048826
- DE-A1-102006 038 661
- US-A- 4 147 847
- US-A- 5 844 010
- US-A- 6 166 098
- US-A1- 2005 131 090
- US-A1- 2007 043 193
- GARY ANDREW ET AL: "Surfactant Technology for Low Density Molded Microcellular and Flexible Polyurethane Systems", PU LATIN AMERICA 2001,, Nr. Paper 8, 1. Januar 2001 (2001-01-01), Seiten 1-7, XP007916126,
- John H Frey ET AL: "New Silicone Surfactants for Rigid Polyurethane Foam", , 1 January 1996 (1996-01-01), XP055330943, Retrieved from the Internet: URL:http://www.grimminger-online.net/Polyu rethane/Papers/New Silicone Surfactants for Rigid Polyurethane Foam UTECH 1996.pdf [retrieved on 2016-12-21]

## Beschreibung

Die vorliegende Erfindung betrifft ein Verfahren zur Herstellung von Polyurethanschaum unter Verwendung von Verbindungen, die olefinische Doppelbindungen tragen als Treibmittel und Polyether-Siloxan-Copolymeren, Polyurethanschäume, die diese Treibmittel und Siloxan-Copolymere enthalten, sowie die Verwendung dieser Polyurethanschäume.

### Stand der Technik:

Halogenkohlenwasserstoffe, besonders fluorhaltige Kohlenwasserstoffe, haben eine breite Anwendung als Treibmittel zur Herstellung von Schäumen gefunden. Allerdings haben diese Verbindungen Nachteile im Bezug auf ihr Potential zur Schädigung der Ozonschicht, Ozon Depletion Potential (ODP), und zur Erwärmung der Erdatmosphäre, Global Warming Potential (GWP), beizutragen. Daher wurden alternative Treibmittel entwickelt mit geringerem ODP und GWP. Ein aktueller Trend ist die Verwendung von halogenhaltigen Verbindungen mit einer olefinischen Doppelbindung im Molekül. Es handelt sich also um Hydrohaloolefine (HHO). Insbesondere werden Hydrofluorolefine (HFO) und Hydrochlorfluorolefine (HCFO) als neue Treibmittel beschrieben.

US 2008/125505 und US 2008/125506 beschreiben die Verwendung von Fluor-haltigen Olefinen als Treibmittel für Schäume. Diese Treibmittel haben ein geringes GWP und ODP.

WO 2008/121790 beschreibt Mischungen von Hydrofluorolefinen (HFO) und Hydrochlorfluorolefin (HCFO) als Treibmittel zur Herstellung von Schäumen.

WO 2008/121779 beschreibt eine Treibmittelzusammensetzung, die mindestens ein Hydrochloroolefin enthält.

WO 2007/053670 beschreibt Treibmittel zur Herstellung von Schäumen enthaltend ungesättigte Fluorkohlenwasserstoffe. Es werden auch Bromofluoroolefine genannt.

In den Anmeldungen WO 2009/073487 und WO 2009/089400 werden cis-1,1,1,4,4,4-Hexafluoro-2-buten bzw. 2-Chloro-3,3,3-trifluoropropen als Treibmittel bei der Herstellung von Polyurethan- und Polyisocyanurat-Schäumen beschrieben.

EP 2 004 773 beschreibt eine Zusammensetzung zur Verwendung in Klimaanlagen, Kühlanlagen, Wärmepumpen, enthaltend ein Fluoroolefin und mindestens eine weitere Komponente. Es wird unter anderem auch die Verwendung als Schaum-Treibmittel beschrieben.

US 5,900,185 beschreibt Brom-haltige Olefine, die eine kurze Lebensdauer in der Atmosphäre haben und unter anderem deren Verwendung als Treibmittel für Schäume.

WO 2007/002703 und US 2008/207788 und WO 2009/067720 beschreiben HFO-1234ze und HCFO-1233zd bzw. Mischungen, die diese Substanzen zusammen mit Fluor-haltigen Ethern enthalten, in verschiedenen Anwendungen einschließlich der Verwendung als Treibmittel für PU-Schäume.

WO 2009/003165 beschreibt Mischungen von Hydrofluorolefinen (HFO) und/oder Hydrochlorfluorolefin (HCFO) mit Stabilisatoren, die den Abbau während der Lagerung, Handhabung und Verwendung verhindern, aber in der Atmosphäre erlauben. Als Stabilisatoren werden Radikal-, Sauerstoff- und Säurefänger sowie Polymerisationsinhibitoren eingesetzt.

Es wird hier eine schädigende Wirkung der Zerfallsprodukte der Treibmittel auf die verwendeten Siloxane beschrieben.

Es werden aber keine speziellen Siloxan-Strukturen, auch Silicon-Surfactants genannt, beschrieben.

US 2009/0099272 beschreibt die Verwendung von Säure/Amin Addukten als Katalysator in Systemen mit olefinischen Fluorhaltigen Treibmitteln, da freie Amine mit den Treibmitteln reagieren und diese Produkte dann die Silicon-Surfactants zersetzen. Damit werden die Möglichkeiten bei der Herstellung einer Schaum-Formulierung deutlich eingeschränkt, da die Amine hier in ihrer katalytischen Wirkung geschwächt werden, was in einer längeren Reaktionszeit der PU-Schaumformulierung resultiert.

US 2009/0099273 beschreibt die Verwendung von Si-freien Surfactants, um das Problem mit den Reaktionsprodukten, gebildet aus Amin und Fluor-haltigen Treibmitteln, zu vermeiden. Es stehen damit nur eine eingeschränkte Anzahl an Surfactants zur Verfügung.

Beide Alternativen bedeuten eine große Einschränkung bei der PU-Schaumherstellung. Es besteht daher der Bedarf an Siloxanen, die die oben beschriebenen Nachteile nicht aufweisen und geeignet sind als Silicon-Surfactants bei der Herstellung von PU-Schaum verwendet zu werden.

Aufgabe dieser Erfindung ist die Bereitstellung von Siloxanen, die bei Verwendung von Halogen-haltigen Olefinen als Treibmittel die oben genannten Nachteile nicht haben und damit zu verbesserten Ergebnissen führen.

Überraschenderweise wurde nun gefunden, dass Siloxane gemäß Formel (I) diese Aufgabe lösen.

Die ausgewählten Siloxane der Formel (I) zeigen zwar die typischen Strukturelemente bislang schon im Stand der Technik beschriebener Siloxane, unterscheiden sich allerdings im Auswahlbereich der Anzahl der Strukturmerkmale. So ist es für den Fachmann völlig überraschend und nicht vorhersehbar, dass spezielle Siloxane gefunden werden konnten, die beispielsweise ohne zusätzliche Radikalfänger oder selbst in Anwesenheit von nicht säureblockierten Aminen in der Lage sind die Siloxantypischen Aufgaben in der Verschäumung zu erfüllen.

Ein Gegenstand der vorliegenden Erfindung ist daher ein Verfahren zur Herstellung von Polyurethanschäumen gemäß Anspruch 1. Hierbei können die Siloxane der Formel (I) auch als Mischung in einem geeigneten Trägermedium anfallen. Diese Mischungen können bedingt durch den Herstellprozess vorliegen oder auch nachträglich hergestellt werden, um beispielsweise die Dosierbarkeit der Siloxane zu erleichtern oder auch die Einarbeitbarkeit der Siloxane in die zu verschäumende Mischung zu verbessern.

Weitere Gegenstände der vorliegenden Erfindung sind Polyurethanschäume gemäß Ansprüchen 9 bis 11. Außerdem ist Gegenstand der vorliegenden Erfindung die Verwendung der erfindungsgemäßen bzw. erfindungsgemäß hergestellten Polyurethanschäume.

Das erfindungsgemäße Verfahren hat den Vorteil, dass gegebenenfalls vorformulierte Mischungen aus Polyolen und/oder Katalysatoren, Wasser/Treibmitteln, dem Schaumstabilisator und ggf. weiteren Additiven, die als gebrauchsfertige Polyurethanschaum-Systeme vermarktet werden, die marktüblichen Lagerzeiten ohne Verschlechterung der Schaumeigenschaften überstehen. Dies gilt insbesondere auch für 1-Komponenten Systeme, in denen auch das Isocyanat der vorformulierten Mischung zugegeben wird.

Der erfindungsgemäße Polyurethanschaum hat den Vorteil, dass er konstant hohe Qualität, d.h. eine besonders feine Zellstruktur mit besonders wenig Schaumdefekten (Lunker, Risse, Verdichtungen) aufweist.

Die erfindungsgemäßen Siloxane haben die folgende Struktur: 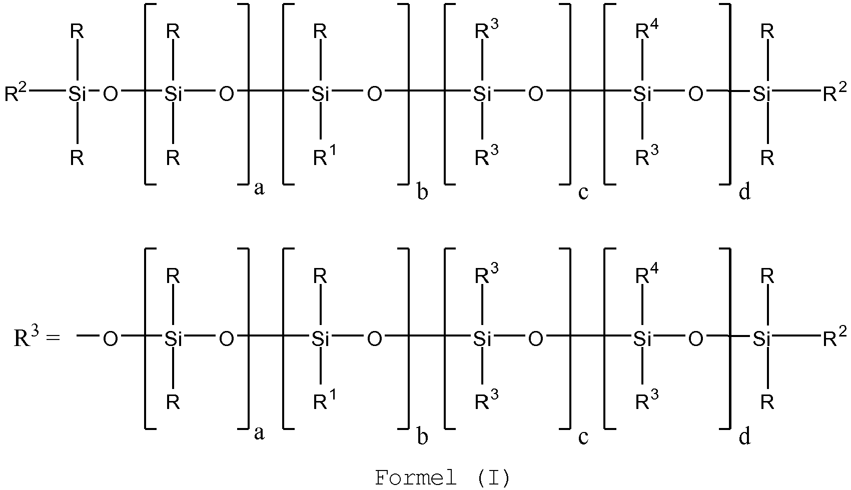 nach Maßgabe des Anspruchs 1.

Die verschiedenen Monomereinheiten der in den Formeln angegebenen Bausteine (Siloxanketten bzw. Polyoxyalkylenkette) können untereinander blockweise aufgebaut sein mit einer beliebigen Anzahl an Blöcken und einer beliebigen Sequenz oder einer statistischen Verteilung unterliegen. Die in den Formeln verwendeten Indices sind als statistische Mittelwerte zu betrachten.

Die erfindungsgemäßen Siloxan-haltigen Mischungen können weitere Stoffe enthalten. Insbesondere können die erfindungsgemäßen Zusammensetzungen weitere Additive/Hilfsmittel, wie sie bei der Polyurethanschaum-Herstellung eingesetzt werden, aufweisen. Bevorzugte Additive/Hilfsmittel, die die erfindungsgemäßen Zusammensetzungen aufweisen können, sind vorzugsweise ausgewählt aus konventionellen SiOC- und SiC-Stabilisatoren, organischen Schaumstabilisatoren, Tensiden, Nukleierungsmitteln, zellverfeinernden Additiven, Zellöffnern, Vernetzern, Emulgatoren, Flammschutzmitteln, Antioxidantien, Antistatika, Bioziden, Farbpasten, festen Füllstoffen, Aminkatalysatoren, Metallkatalysatoren, Polyolen und/oder Puffersubstanzen.

Es kann außerdem vorteilhaft sein, wenn die erfindungsgemäße Zusammensetzung ein Lösungsmittel, insbesondere ein organisches Lösungsmittel, bevorzugt ein Lösungsmittel ausgewählt aus Glykolen, Alkoxylaten und Ölen synthetischer und/oder natürlicher Herkunft enthält.

Die Herstellung der Siloxane nach Formel (I) erfolgt nach den bekannten Methoden wie z. B. die edelmetallkatalysierte Hydrosilylierungsreaktion von Verbindungen, die eine Doppelbindung enthalten, mit entsprechenden Wasserstoffsiloxanen wie beispielsweise in EP 1 520 870, beschrieben. Die Schrift EP 1 520 870 wird hiermit als Referenz eingeführt und gilt als Teil des Offenbarungsgehaltes der vorliegenden Erfindung.

Als Verbindungen, die zumindest eine Doppelbindung pro Molekül aufweisen, können z. B. α-Olefine, Vinylpolyoxyalkylene und/oder Allylpolyoxyalkylene eingesetzt werden. Vorzugsweise werden Vinylpolyoxyalkylene und/oder Allylpolyoxyalkylene eingesetzt. Besonders bevorzugte Vinylpolyoxyalkylene sind z. B. Vinylpolyoxyalkylene mit einem Molgewicht im Bereich von 100 g/Mol bis 5.000 g/Mol, die aus den Monomeren Propylenoxid, Ethylenoxid, Butylenoxid und/oder Styroloxid blockweise oder statistisch verteilt aufgebaut sein können und die sowohl hydroxyfunktionell als auch durch eine Methyletherfunktion oder eine Acetoxyfunktion endverkappt sein können. Besonders bevorzugte Allylpolyoxyalkylene sind z. B. Allylpolyoxyalkylene mit einem Molgewicht im Bereich von 100 g/Mol bis 5.000 g/Mol, die aus den Monomeren Propylenoxid, Ethylenoxid, Butylenoxid und/oder Styroloxid blockweise oder statistisch verteilt aufgebaut sein können und die sowohl hydroxyfunktionell als auch durch eine Methyletherfunktion oder eine Acetoxyfunktion endverkappt sein können. Besonders bevorzugt werden als Verbindungen, die zumindest eine Doppelbindung pro Molekül aufweisen, die in den Beispielen genannten α-Olefine, Allylalkohol, 1-Hexenol, Vinylpolyoxyalkylene und/oder Allylpolyoxyalkylene sowie Allylglycidylether und Vinylcyclohexenoxid eingesetzt.

Bevorzugt werden in dem erfindungsgemäßen Verfahren Siloxane der Formel (I) eingesetzt worin a unabhängig voneinander 1 bis 150 ist, b unabhängig voneinander 1 bis 30 ist, c unabhängig voneinander 0 bis 4 ist, d unabhängig voneinander > 0 bis 4 ist, mit der Maßgabe, dass pro Molekül der Formel (I) die mittlere Anzahl ∑d der T-Einheiten und die mittlere Anzahl ∑c der Q-Einheiten pro Molekül jeweils nicht größer als 20, die mittlere Anzahl ∑a der D-Einheiten pro Molekül nicht größer als 1500 und die mittlere Anzahl ∑b der R¹ tragenden Siloxy-Einheiten pro Molekül nicht größer als 50 ist.

In einer besonders bevorzugten Ausführung des erfindungsgemäßen Verfahrens werden Siloxane der Formel (I) eingesetzt worin R¹ unabhängig voneinander ein organischer Rest

-CH₂-CH₂-CH₂-O-(CH₂-CH₂O-)ₓ-(CH₂-CH(R')O-)_{y}-R"

-CH₂-CH₂-O-(CH₂-CH₂O-)ₓ-(CH₂-CH(R')O-)_{y}-R"

ist, worin x 0 bis 100, vorzugsweise > 0, insbesondere 1 bis 50 und y 0 bis 100, vorzugsweise > 0, insbesondere 1 bis 50 ist, R' Methyl-Reste darstellen. R" unabhängig voneinander ein Wasserstoffrest oder eine Alkylgruppe mit 1 bis 4 C-Atomen, eine Gruppe -C(O)-R''' mit R''' = Alkylrest, eine Gruppe -CH₂-O-R', eine Alkylarylgruppe, wie z. B. eine Benzylgruppe, die Gruppe -C(O)NH-R' bedeutet.

In einer weiteren bevorzugten Ausführung des Verfahrens werden Siloxane der Formel (I) eingesetzt, worin R¹ unabhängig voneinander ein organischer Rest ausgewählt aus der Gruppe umfassend

-CH₂-CH₂-CH₂-O-(CH₂-CH₂O-)ₓ-(CH₂-CH(R')O-)_{y}-R"

und/oder

-CH₂-CH₂-O-(CH₂-CH₂O-)ₓ-(CH₂-CH(R')O-)_{y}-R"

ist, worin x 0 bis 100, vorzugsweise > 0, insbesondere 1 bis 50, y 0 bis 100, vorzugsweise > 0, insbesondere 1 bis 50, R' Methyl ist und R" unabhängig voneinander ein Wasserstoffrest oder eine Alkylgruppe mit 1 bis 4 C-Atomen, eine Gruppe -C(O)-R''' mit R''' = Alkylrest, eine Gruppe -CH₂-O-R', eine Alkylarylgruppe, wie z. B. eine Benzylgruppe, die Gruppe -C(O)NH-R' bedeutet, wobei der molare Anteil an Oxyethylen-Einheiten mind. 70% der Oxalkylen-Einheiten ausmacht, also x/(x+y) >0,7 ist. Außerdem kann es vorteilhaft sein wenn die Polyoxyalkylen-Kette am Ende einen Wasserstoff trägt und gleichzeitig der molare Anteil an Oxyethylen-Einheiten maximal 70% der Oxalkylen-Einheiten ausmacht, also x/(x+y) <0,7 ist und R" ein Wasserstoff-Rest bedeutet.

In einer weiteren bevorzugten Ausführungsform des erfindungsgemäßen Verfahrens werden Siloxane der Formel (I) verwendet in denen die endständigen, oder auch alpha- und omega- genannten, Positionen am Siloxan mindestens teilweise mit Resten R¹ funktionalisiert sind. Es sind hierbei zumindest 10 mol-%, bevorzugt zumindest 30 mol-%, besonders bevorzugt zumindest 50 mol-% der endständigen Positionen mit Resten R¹ funktionalisiert.

In einer besonders bevorzugten Ausführungsform des erfindungsgemäßen Verfahrens werden Siloxane der Formel (I) verwendet in denen im statistischen Mittel maximal 50%, bevorzugt maximal 45%, besonders bevorzugt maximal 40% des gesamten mittleren Molgewichts des Siloxans auf die aufsummierte Molmasse aller, gegebenenfalls unterschiedlichen, Reste R¹ im Siloxan entfällt.

In einer weiteren bevorzugten Ausführungsform des erfindungsgemäßen Verfahrens werden Siloxane der Formel (I) verwendet in denen der Rest R für Methyl steht und die Anzahl der Strukturelemente mit dem Index a in größerer Anzahl vorliegen als die Strukturelemente mit dem Index b, in der Art, dass der Quotient a/b mindestens gleich sieben , vorzugsweise größer 10, besonders bevorzugt größer 12 ist.

In einer weiteren bevorzugten Ausführungsform des erfindungsgemäßen Verfahrens werden Siloxane der Formel (I) verwendet in denen die in Rest R¹ enthaltenen Oxalkylen-Einheiten ausschließlich Oxyethylen-Einheiten sind und dabei der Rest R" kein Wasserstoff ist.

In einer weiteren bevorzugten Ausführungsform des erfindungsgemäßen Verfahrens werden Siloxane der Formel (I) verwendet, die keine oder im statistischen Mittel weniger als eine Verzweigung im Siloxan-Gerüst haben und für die damit gilt, dass ∑c + ∑d < 1 ist.

In einer weiteren bevorzugten Ausführungsform des erfindungsgemäßen Verfahrens werden Siloxane der Formel (I) verwendet, die im statistischen Mittel eine oder mehr als eine Verzweigung im Siloxan-Gerüst haben und für die damit gilt, dass ∑c + ∑d ≥ 1 ist.

Die erfindungsgemäßen Siloxane können auch als Teil von Zusammensetzungen mit verschiedenen Trägermedien eingesetzt werden. Als Trägermedien kommen beispielweise Glykole, Alkoxylate oder Öle synthetischer und/oder natürlicher Herkunft in Frage. Bevorzugt wird soviel der Zusammensetzung zugegeben, dass der Massenanteil an Verbindungen der Formel (I) am fertigen Polyurethanschaum von 0,01 bis 10 Gew.-%, bevorzugt von 0,1 bis 3 Gew.-% beträgt.

Die erfindungsgemäßen Zusammensetzungen sind als Schaumstabilisatoren in den üblichen Formulierungen zur Herstellung von Polyurethan-Schaumstoffen, bestehend aus einem oder mehreren organischen Isocyanaten mit zwei oder mehr Isocyanat-Funktionen, einem oder mehreren Polyolen mit zwei oder mehr gegenüber Isocyanat reaktiven Gruppen, Katalysatoren für die Reaktionen Isocyanat-Polyol und/oder Isocyanat-Wasser und/oder die Isocyanat-Trimerisierung, Wasser, optional physikalischen Treibmitteln, optional Flammschutzmitteln und ggf. weiteren Additiven, einsetzbar.

Geeignete Isocyanate im Sinne dieser Erfindung sind alle mehrfunktionalen organischen Isocyanate, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4, sowie die verschiedenen Isomere des TDI in reiner Form oder als Isomerengemisch.

Geeignete Polyole im Sinne dieser Erfindung sind alle organischen Substanzen mit mehreren gegenüber Isocyanaten reaktiven Gruppen, sowie deren Zubereitungen. Bevorzugte Polyole sind alle zur Herstellung von Polyurethan-Schaumstoffen üblicherweise verwendeten Polyetherpolyole und Polyesterpolyole. Polyetherpolyole werden durch Umsetzung von mehrwertigen Alkoholen oder Aminen mit Alkylenoxiden gewonnen. Polyesterpolyole basieren auf Estern mehrwertiger Carbonsäuren (die entweder aliphatisch, beispielsweise Adipinsäure, oder aromatisch, beispielsweise Phthalsäure oder Terephthalsäure, sein können) mit mehrwertigen Alkoholen (meist Glycolen).

Ein geeignetes Verhältnis von Isocyanat und Polyol, ausgedrückt als Index der Formulierung, d.h. als stöchiometrisches Verhältnis von Isocyanat-Gruppen zu gegenüber Isocyanat reaktiven Gruppen (z.B. OH-Gruppen, NH-Gruppen) multipliziert mit 100, liegt im Bereich von 10 bis 1000, bevorzugt 80 bis 350.

Geeignete Katalysatoren im Sinne dieser Erfindung sind Substanzen, die die Gelreaktion (Isocyanat-Polyol), die Treibreaktion (Isocyanat-Wasser) oder die Di- bzw. Trimerisierung des Isocyanats katalysieren. Typische Beispiele sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, sowie Metall-haltige Verbindungen wie beispielsweise Zinnverbindungen wie Dibutylzinndilaurat oder Zinn-II-2-ethylhexanoat und Kaliumsalze wie Kaliumacetat und Kalium-2-ethylhexanoat.

Geeignete Einsatzmengen richten sich nach dem Typ des Katalysators und liegen üblicherweise im Bereich von 0,05 bis 5 pphp (= Gewichtsteilen bezogen auf 100 Gewichtsteile Polyol) bzw. 0,1 bis 10 pphp für Kaliumsalze.

Geeignete Wasser-Gehalte im Sinne dieser Erfindung hängen davon ab, ob zusätzlich zum halogenierten Olefin noch Wasser eingesetzt wird oder nicht. Üblicherweise werden Wassermengen von 0,1 bis 5 pphp eingesetzt.

Neben den oben genannten halogenhaltigen Olefinen können auch weitere geeignete physikalische Treibmittel eingesetzt werden. Dies sind beispielsweise verflüssigtes CO₂, und leichtflüchtige Flüssigkeiten, beispielsweise Kohlenwasserstoffe mit 4 oder 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, Sauerstoff-haltige Verbindungen wie Methylformiat und Dimethoxymethan, oder Chlorkohlenwasserstoffe, bevorzugt Dichlormethan und 1,2-Dichlorethan.

Neben Wasser und den physikalischen Treibmitteln, können auch andere chemische Treibmittel eingesetzt werden, die mit Isocyanaten unter Gasentwicklung reagieren, wie beispielsweise Ameisensäure.

Geeignete Flammschutzmittel im Sinne dieser Erfindung sind bevorzugt flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe wie Blähgraphit und Melamin geeignet.

Die Verarbeitung der erfindungsgemäßen Formulierungen zu Schaumstoffen kann nach allen dem Fachmann geläufigen Verfahren erfolgen, beispielsweise im Handmischverfahren oder bevorzugt mit Hilfe von Hochdruck-Verschäumungsmaschinen. Dabei können diskontinuierliche Verfahren, beispielsweise zur Produktion von Formschäumen, Kühlschränken und Paneelen, oder kontinuierliche Verfahren, beispielsweise bei Dämmplatten, Metallverbundelementen, Blöcken oder bei Sprühverfahren zum Einsatz kommen.

Ein Spezialfall stellen die 1- und 1,5-Komponenten-Dosenschäume dar, bei denen ein Polyurethan-Präpolymer eingesetzt wird. Auch in dieser Anwendung können die erfindungsgemäßen Siloxan-haltigen Zusammensetzungen als Schaumstabilisator eingesetzt werden.

Die erfindungsgemäßen Polyurethanschäume zeichnen sich dadurch aus, dass sie eine erfindungsgemäße Siloxan-haltige Zusammensetzung aufweisen bzw. enthalten. Vorzugsweise beträgt der Massenanteil an Verbindungen der Formel (I) am fertigen Polyurethanschaum von 0,01 bis 10 Gew.-%, bevorzugt von 0,1 bis 3 Gew.-%.

Die erfindungsgemäßen Polyurethanschäume können z. B. ein Polyurethanhartschaum, ein Polyurethanweichschaum, ein viskoelastischer Schaum, ein HR-Schaum, ein halbharter Polyurethanschaum, ein thermoverformbarer Polyurethanschaum oder ein Integralschaum sein. Die Bezeichnung Polyurethan ist hierbei als Oberbegriff für ein aus Di- bzw. Polyisocyanaten und Polyolen oder anderen gegenüber Isocyanat reaktive Spezies, wie z.B. Aminen, hergestelltes Polymer zu verstehen, wobei die Urethan-Bindung nicht ausschließlicher oder überwiegender Bindungstyp sein muss. Auch Polyisocyanurate und Polyharnstoffe sind ausdrücklich mit eingeschlossen.

In einer bevorzugten Ausführungsform handelt es sich bei den erfindungsgemäß hergestellten Schäumen um geschlossenzellige Schäume.

Die erfindungsgemäßen Polyurethanschäume können als Bestandteile von oder in und/oder als beispielsweise Kühlschrankisolierung, Dämmplatte, Sandwichelement, Rohrisolation, Sprühschaum, 1- & 1,5-Komponenten-Dosenschaum, Holzimitat, Modellschaum, Verpackungsschaum, Matratzen, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum und Kleber verwendet werden.

Weitere Gegenstände und Ausführungsformen der Erfindung ergeben sich aus den Ansprüchen, deren Offenbarungsgehalt vollumfänglich Teil der Beschreibung ist.

Das erfindungsgemäßen Verfahren zur Herstellung der Polyurethanschäume, die Polyurethanschäume selbst sowie deren Verwendungen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Herstellung erfindungsgemäßer Siloxane

Erfindungsgemäße Siloxane der Formel (I) können nach den im Stand der Technik bekannten Verfahren durch Umsetzung mit entsprechenden Wasserstoffsiloxanen durch Hydrosilylierung hergestellt werden.

Es wurden Allylpolyether und Olefine zu Verbindungen gemäß Formel (I) umgesetzt. Die Herstellung erfolgte verfahrensanalog zu Beispiel 7 aus DE 1020070554852 und damit übereinstimmend mit dem Stand der Technik zur Herstellung von SiC-verknüpften Polyethersiloxanen, wie er beispielsweise auch in der EP 1520870 beschrieben ist.

In Tabelle 1 sind die verwendeten Polyether zusammengefasst.

**Tabelle 1: Zur Herstellung der Verbindungen in Tabelle 2 verwendete Allylpolyether (x = Ethylenoxid-Einheiten, y= Propylenoxid-Einheiten, R" = Endgruppe)**

| Polyether | Starter | R" | x = | y = |
|---|---|---|---|---|
| PE 1 | Allylalkohol | - H | 11 | 0 |
| PE 2 | Allylalkohol | - H | 9 | 3 |
| PE 3 | Allylalkohol | - H | 13 | 4 |
| PE 4 | Allylalkohol | - H | 12 | 9 |
| PE 5 | Hydroxyethyl -vinylether | - H | 15 | 7 |
| PE 6 | Allylalkohol | - H | 13 | 14 |
| PE 7 | Allylalkohol | - CH₃ | 10 | 0 |
| PE 9 | Allylalkohol | - H | 36 | 38 |

Die Struktur der erhaltenen Verbindung der Formel (I) kann Tabelle 2 entnommen werden. Die in Tabelle 2 aufgeführten Parameter beziehen sich auf die oben genannte Formel (I).

**Tabelle 2: Siloxane der Beispiele 1 bis 10, enthaltend Verbindungen der Formel (I)**

| Bsp. | R | ∑a | R¹ | R⁴ | ∑b | ∑c | ∑d | R² |
|---|---|---|---|---|---|---|---|---|
| | | | | | | | | |
| 1 | CH₃ | 44 | PE 2 | CH₃ | 5 | 0 | << 1 | R |
| 2 | CH₃ | 65 | PE 4 | CH₃ | 4 | 0 | << 1 | R |
| 3 | CH₃ | 50 | PE 1)¹ | CH₃ | 8 | 0 | << 1 | R¹ |
| 4 | CH₃ | 20 | PE 1 | CH₃ | 2 | 0 | << 1 | R |
| 5 | CH₃ | 40 | PE 7 | CH₃ | 5 | 0 | << 1 | R |
| 6 | CH₃ | 65 | PE 6/PE 8)² | CH₃ | 5 | 0 | << 1 | R¹ |
| 7 | CH₃ | 40 | PE 4/PE 1)³ | CH₃ | 3 | 0,5 | 2 | R¹ |
| 8 | CH₃ | 40 | PE 3 | CH₃ | 3 | 0 | 1 | R |
| 9 | CH₃ | 40 | PE 3 | C₈H₁₇ | 3 | 0,5 | 2 | R¹ |
| 10 | CH₃ | 40 | PE 5 | CH₃ | 4 | 0 | << 1 | R¹ |

| | | | | | | | | |
|---|---|---|---|---|---|---|---|---|
| )¹ Gemisch bestehend aus 80 Äq.-% PE 1 + 20 Äq.% C₁₆-Olefin )² Gemisch bestehend aus 60 Äq.-% PE 6 + 40 Äq.% PE 8 )³ Gemisch bestehend aus 50 Äq.-% PE 4 + 50 Äq.% PE 1 | | | | | | | | |

### Verschäumungsbeispiele:

Für die anwendungstechnische Ausprüfung der erfindungsgemäßen Formulierungen wurde folgende Schaumformulierung verwendet:

**Tabelle 3: Formulierungen für Hartschaum-Anwendungen (Hartschaum-Paneel/Dämmplatte) in Massenteilen**

| Formulierung | A: PUR Fließformulierung | B: PIR Dämmplatte |
|---|---|---|
| Polyol | Polyetherpolyol-Mischung 100 Teile | Stepanpol® PS 2352* 100 Teile |
| Tris(1-chlor-2-propyl)phosphat | - | 15 Teile |
| N,N,N',N",N"-Pentamethyldiethylentriamin | 0,2 Teile | 0,2 Teile |
| N,N-Dimethylcyclohexylamin | 2,0 Teile | - |
| Kaliumoctoat (75 Gew.-% in Diethylenglycol) | - | 4,0 Teile |
| Wasser | 2,0 Teile | 0,8 Teile |
| 1,3,3,3-Tetrafluoropropen (E-Isomer) | 3,0 Teile | 4,0 Teile |
| 1-Chloro-3,3,3-Trifluoropropen (E-Isomer) | 12,0 Teile | 18,0 Teile |
| 1,2,3,3,3-Pentafluoropropen | 3,0 Teile | 4,0 Teile |
| | | |
| Siloxan | 2,0 Teile | 2,0 Teile |
| | | |
| Desmodur 44V20L** | 140 Teile | 200 Teile |

| | | |
|---|---|---|
| * Polyesterpolyol der Firma Stepan ** polymeres MDI der Firma Bayer, 200 mPa*s, 31,5% NCO, Funktionalität 2,7 | | |

Die Durchführung der Verschäumungen erfolgte im Handmischverfahren. Dazu wurden die in Tabelle 3 beschriebenen Formulierungen A und B mit verschiedenen Siloxanen hergestellt und in einen Becher eingewogen. Anschließend wurde das MDI zugegeben, die Reaktionsmischung mit einem Tellerrührer von 6 cm Durchmesser 5 Sekunden lang bei 3000 Upm verrührt und sofort in eine auf 50°C thermostatisierte Aluminiumform von 50 cm x 25 cm x 5 cm Größe überführt, welche mit Polyethylenfolie ausgekleidet war. Die Einsatzmenge an Schaumformulierung war dabei so bemessen, dass sie um 10 % über der zur Mindestbefüllung der Form notwendigen Menge lag.

Einen Tag nach der Verschäumung wurden die Schaumstoffe analysiert. An der Ober- und Unterseite wurden die Oberflächen und nach dem Aufschneiden der Schäume die Innenstörungen subjektiv anhand einer Skala von 1 bis 10 beurteilt, wobei 10 einen ungestörten Schaum und 1 einen extrem stark gestörten Schaum repräsentiert. Die Porenstruktur (mittlere Zahl der Zellen pro 1 cm) wurde auf einer Schnittfläche optisch durch Vergleich mit Referenzschäumen beurteilt.

Die Ergebnisse sind in Tabelle 4 zusammengestellt. Es sind die verwendeten Siloxane, die Schaum-Formulierungen, sowie die optische Beurteilung und die Porenstruktur der Schäume zusammengefasst.

**Tabelle 4: Ergebnisse der Verschäumungen**

| Beispiel | Siloxan aus Bsp. | Schaum-. Formul. | Bewertung oben/unten/innen | Zellen/cm |
|---|---|---|---|---|
| 11 | 1 | A | 7/9/8 | 46-50 |
| 12 | 2 | B )⁴ | 8/8/7 | 46-50 |
| 13 | 3 | B )⁴ | 7/9/8 | 46-50 |
| 14 | 4 | B | 6/8/9 | 46-50 |
| 15 | 5 | B | 7/7/9 | 46-50 |
| 16 | 6 | B )⁴ | 6/7/8 | 41-45 |
| 17 | 7 | B | 8/8/7 | 41-45 |
| 18 | 8 | B | 8/9/8 | 46-50 |
| 19 | 9 | B | 7/9/8 | 46-50 |
| 20 | 10 | A | 7/9/8 | 46-50 |

| | | | | |
|---|---|---|---|---|
| )⁴ Die Schaumformulierung wurde zusammen mit dem Siloxan für 3 Tage bei 50°C gelagert vor der Verschäumung | | | | |

Die Daten der Tabelle 4 zeigen, dass mit erfindungsgemäßen Siloxanen in Formulierungen, die halogenhaltige Olefine als Treibmittel enthalten, zu Schaumstoffen mit guter Qualität führen. Auch nach der Alterung der fertig formulierten Polyolkomponente mit Stabilisator erhielt man fehlerfreie Schäume. Ein solches Ergebnis war nach US 2009/0099272 Beispiel 2 nicht zu erreichen.

Die Durchführung der Verschäumungen erfolgte im Handmischverfahren. Dazu wurden die in Tabelle 3 beschriebenen Formulierungen A und B mit verschiedenen Siloxanen hergestellt und in einen Becher eingewogen. Anschließend wurde das MDI zugegeben, die Reaktionsmischung mit einem Tellerrührer von 6 cm Durchmesser 5 Sekunden lang bei 3000 Upm verrührt und sofort in eine auf 50°C thermostatisierte Aluminiumform von 50 cm x 25 cm x 5 cm Größe überführt, welche mit Polyethylenfolie ausgekleidet war. Die Einsatzmenge an Schaumformulierung war dabei so bemessen, dass sie um 10 % über der zur Mindestbefüllung der Form notwendigen Menge lag.

Einen Tag nach der Verschäumung wurden die Schaumstoffe analysiert. An der Ober- und Unterseite wurden die Oberflächen und nach dem Aufschneiden der Schäume die Innenstörungen subjektiv anhand einer Skala von 1 bis 10 beurteilt, wobei 10 einen ungestörten Schaum und 1 einen extrem stark gestörten Schaum repräsentiert. Die Porenstruktur (mittlere Zahl der Zellen pro 1 cm) wurde auf einer Schnittfläche optisch durch Vergleich mit Referenzschäumen beurteilt.

Die Ergebnisse sind in Tabelle 4 zusammengestellt. Es sind die verwendeten Siloxane, die Schaum-Formulierungen, sowie die optische Beurteilung und die Porenstruktur der Schäume zusammengefasst.

**Tabelle 4: Ergebnisse der Verschäumungen**

| Beispiel | Siloxan aus Bsp. | Schaum-. Formul. | Bewertung oben/unten/innen | Zellen/cm |
|---|---|---|---|---|
| 11 | 1 | A | 7/9/8 | 46-50 |
| 12 | 2 | B)⁴ | 8/8/7 | 46-50 |
| 13 | 3 | B)⁴ | 7/9/8 | 46-50 |
| 14 | 4 | B | 6/8/9 | 46-50 |
| 15 | 5 | B | 7/7/9 | 46-50 |
| 16 | 6 | B)⁴ | 6/7/8 | 41-45 |
| 17 | 7 | B | 8/8/7 | 41-45 |
| 18 | 8 | B | 8/9/8 | 46-50 |
| 19 | 9 | B | 7/9/8 | 46-50 |
| 20 | 10 | A | 7/9/8 | 46-50 |

| | | | | |
|---|---|---|---|---|
| )⁴ Die Schaumformulierung wurde zusammen mit dem Siloxan für 3 Tage bei 50°C gelagert vor der Verschäumung | | | | |

Die Daten der Tabelle 4 zeigen, dass mit erfindungsgemäßen Siloxanen in Formulierungen, die halogenhaltige Olefine als Treibmittel enthalten, zu Schaumstoffen mit guter Qualität führen. Auch nach der Alterung der fertig formulierten Polyolkomponente mit Stabilisator erhielt man fehlerfreie Schäume. Ein solches Ergebnis war nach US 2009/0099272 Beispiel 2 nicht zu erreichen.

## Patentansprüche

1. Verfahren zur Herstellung von Polyurethanschäumen unter Verwendung von Zusammensetzungen enthaltend zumindest ein Treibmittel bestehend aus halogenhaltigen Olefinen und zumindest ein Siloxan der Formel (I) 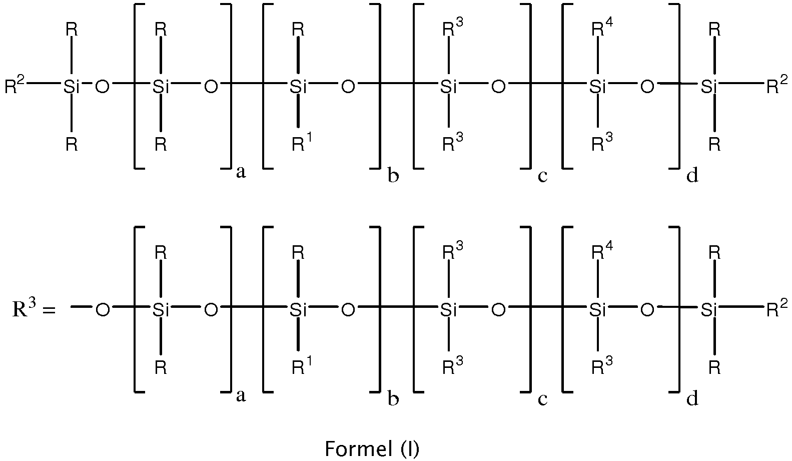 worin
a unabhängig voneinander 1 bis 150 ist,
b unabhängig voneinander 1 bis 30 ist,
c unabhängig voneinander 0 bis 5 ist,
d unabhängig voneinander 0 bis 5 ist,
mit der Maßgabe, dass pro Molekül der Formel (I) die mittlere Anzahl ∑d der T-Einheiten und die mittlere Anzahl ∑c der Q-Einheiten pro Molekül jeweils nicht größer als 50, die mittlere Anzahl ∑a der D-Einheiten pro Molekül nicht größer als 2000 und die mittlere Anzahl ∑b der R¹ tragenden Siloxy-Einheiten pro Molekül nicht größer als 100 ist,
R ein Methylrest ist,
R² unabhängig voneinander R¹ oder R ist,
R⁴ unabhängig voneinander ein gesättigter Kohlenwasserstoffrest mit 1 bis zu 20 C-Atomen ist,
mit der Maßgabe, dass mindestens einer der Substituenten R¹, R² und/oder R⁴ nicht gleich R ist,
wobei Siloxane der Formel (I) eingesetzt werden, worin R¹ unabhängig voneinander ein organischer Rest ausgewählt aus der Gruppe umfassend
-CH₂-CH₂-CH₂-O-(CH₂-CH₂O-)ₓ-(CH₂-CH(R')O-)_{y}-R" und/oder
-CH₂-CH₂-O-(CH₂-CH₂O-)ₓ-(CH₂-CH(R')O-)_{y}-R" ist,
worin
x 0 bis 100,
y 0 bis 100,
R' Methyl ist und
R" unabhängig voneinander ein Wasserstoffrest oder eine Alkylgruppe mit 1 bis 4 C-Atomen, eine Gruppe -C(O)-R'" mit R'" = Alkylrest, eine Gruppe -CH₂-O-R', eine Alkylarylgruppe, die Gruppe -C(O)NH-R' bedeutet,
wobei der molare Anteil an Oxyethylen-Einheiten mind. 70% der Oxalkylen-Einheiten ausmacht, also x/(x+y) >0,7 ist oder der molare Anteil an Oxyethylen-Einheiten maximal 70% der Oxalkylen-Einheiten ausmacht, also x/(x+y) <0,7 ist und R" ein Wasserstoff-Rest bedeutet.

2. Verfahren zur Herstellung von Polyurethanschäumen nach Anspruch 1 unter Verwendung von Treibmittel bestehend aus fluorhaltigen Olefinen als Treibmittel und Siloxanen der Formel (I) worin
a unabhängig voneinander 1 bis 150 ist,
b unabhängig voneinander 1 bis 30 ist,
c unabhängig voneinander > 0 bis 4 ist,
d unabhängig voneinander > 0 bis 4 ist,
mit der Maßgabe, dass pro Molekül der Formel (I) die mittlere Anzahl ∑d der T-Einheiten und die mittlere Anzahl ∑c der Q-Einheiten pro Molekül jeweils nicht größer als 20, die mittlere Anzahl ∑a der D-Einheiten pro Molekül nicht größer als 1500 und die mittlere Anzahl ∑b der R¹ tragenden Siloxy-Einheiten pro Molekül nicht größer als 50 ist.

3. Verfahren nach zumindest einem der Ansprüche 1 oder 2, wobei mindestens 10% der Rest R² gleich R¹ sind.

4. Verfahren nach einem der Ansprüche 1 bis 3, wobei Siloxane der Formel (I) verwendet werden in denen im statistischen Mittel maximal 50%, bevorzugt maximal 45%, besonders bevorzugt maximal 40% des gesamten mittleren Molgewichts des Siloxans auf die aufsummierte Molmasse aller, gegebenenfalls unterschiedlichen, Reste R¹ im Siloxan entfällt.

5. Verfahren nach einem der Ansprüche 1 bis 4, wobei R = Methyl ist und der Quotient a/b mindestens gleich sieben ist.

6. Verfahren nach zumindest einem der Ansprüche 1 bis 5, wobei in R¹ y=0 und R" nicht Wasserstoff ist.

7. Verfahren nach einem der Ansprüche 1 bis 6, wobei ∑c + ∑d < 1 ist.

8. Verfahren nach einem der Ansprüche 1 bis 7, wobei ∑c + ∑d ≥ 1 ist.

9. Polyurethanschaum hergestellt nach einem Verfahren nach zumindest einem der Ansprüche 1 bis 8.

10. Polyurethanschaum nach Anspruch 9, **dadurch gekennzeichnet, dass** er geschlossenzellig ist.

11. Polyurethanschaum nach zumindest einem der Ansprüche 9 oder 10, **dadurch gekennzeichnet, dass** der Polyurethanschaum ein Polyurethanhartschaum, ein Polyurethanweichschaum, ein viskoelastischer Schaum, ein HR-Schaum, ein halbharter Polyurethanschaum, ein thermoverformbarer Polyurethanschaum oder ein Integralschaum ist.

12. Verwendung der Polyurethanschäume gemäß zumindest einem der Ansprüche 9 bis 11 in und/oder als Kühlschrankisolierung, Dämmplatten, Sandwichelementen, Rohrisolationen, Sprühschaum, 1- und/oder 1,5-Komponenten-Dosenschaum, Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsohle, Teppichrückseitenschaum, Filterschaum, Dichtschaum und Kleber oder zur Herstellung entsprechender Produkte.

## Claims

1. Method for producing polyurethane foams using compositions containing one or more than one blowing agent consisting of halogenated olefins and one or more than one siloxane of formula (I): 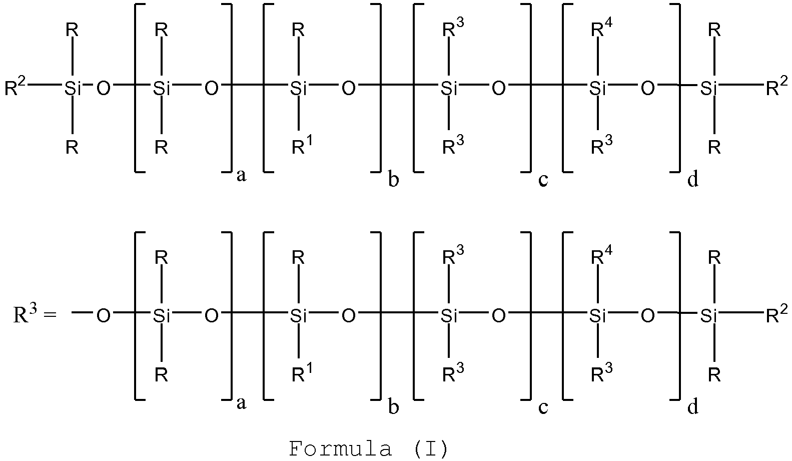 where
a in each occurrence independently is from 1 to 150,
b in each occurrence independently is from 1 to 30,
c in each occurrence independently is from 0 to 5,
d in each occurrence independently is from 0 to 5,
with the proviso that, per molecule of formula (I), the average number ∑d of T-units and the average number ∑c of Q-units per molecule are neither greater than 50, the average number ∑a of D-units per molecule is not greater than 2000 and the average number ∑b of R¹-bearing siloxy units per molecule is not greater than 100,
R is a methyl moiety
R² in each occurrence independently is R¹ or R,
R⁴ in each occurrence independently is a saturated hydrocarbon moiety having 1 to 20 carbon atoms,
with the proviso that at least one substituent from R¹, R² and/or R⁴ is other than R,
wherein siloxanes of formula (I) are utilized where
R¹ in each occurrence independently is an organic moiety selected from the group comprising
-CH₂-CH₂-CH₂-O-(CH₂-CH₂O-)ₓ-(CH₂-CH(R')O-)_{y}-R"
and/or
-CH₂-CH₂-O-(CH₂-CH₂O-)ₓ-(CH₂-CH(R')O-)_{y}-R",
where
x is from 0 to 100,
y is from 0 to 100,
R' is methyl and
R" in each occurrence independently is hydrogen or an alkyl group of 1 to 4 carbon atoms, a -C(O)-R''' group where R''' = alkyl, a -CH₂-O-R' group, an alkylaryl group, a -C(O)NH-R' group,
wherein the molar fraction of oxyethylene units comprises at least 70% of the oxyalkylene units, i.e., x/(x+y) is >0.7, or the molar fraction of oxyethylene units comprises at most 70% of the oxyalkylene units, i.e., x/(x+y) is <0.7 and R" denotes hydrogen.

2. method for producing polyurethane foams according to Claim 1 using blowing agents consisting of fluorinated olefins as blowing agents and siloxanes of formula (I) where
a in each occurrence independently is from 1 to 150, b in each occurrence independently is from 1 to 30, c in each occurrence independently is > 0 to 4,
d in each occurrence independently is > 0 to 4, with the proviso that, per molecule of formula (I), the average number ∑d of T-units and the average number ∑c of Q-units per molecule are neither greater than 20, the average number ∑a of D-units per molecule is not greater than 1500 and the average number ∑b of R¹-bearing siloxy units per molecule is not greater than 50.

3. Method according to one or more of Claims 1 and 2 wherein at least 10% of the R² moieties are equal to R¹.

4. Method according to any one of Claims 1 to 3 which uses siloxanes of formula (I) in each of which statistically on average at most 50%, preferably at most 45% and more preferably at most 40% of the entire average molecular weight of the siloxane is accounted for by the summed molar mass of all, optionally different, R¹ moieties in the siloxane.

5. Method according to any one of Claims 1 to 4 wherein R is methyl and the a/b ratio is not less than 7.

6. Method according to one or more of Claims 1 to 5 wherein, in R¹, y=0 and R" is not hydrogen.

7. Method according to any one of Claims 1 to 6 wherein ∑c + ∑d is < 1.

8. Method according to any one of Claims 1 to 7 wherein ∑c + ∑d is ≥ 1.

9. Polyurethane foam obtained by a method according to one or more of Claims 1 to 8.

10. Polyurethane foam according to Claim 9, **characterized in that** it is closed-cell.

11. Polyurethane foam according to either or both of Claims 9 and 10, **characterized in that** the polyurethane foam is a rigid polyurethane foam, a flexible polyurethane foam, a viscoelastic foam, an HR foam, a semirigid polyurethane foam, a thermoformable polyurethane foam or an integral foam.

12. Use of polyurethane foams according to one or more of Claims 9 to 11 in and/or as refrigerator insulation, insulation panels, sandwich elements, tube insulation, spray foam, 1- and/or 1.5-pack can foam, wood imitation, modelling foam, packaging foam, mattress, furniture cushioning, automotive seat cushioning, headrest, dashboard, automotive interior, automotive roof liner, sound absorption material, steering wheel, shoe sole, carpet backing foam, filter foam, sealing foam and adhesive or for producing corresponding products.

## Revendications

1. Procédé pour la préparation de mousses de polyuréthane avec utilisation de compositions contenant au moins un agent gonflant constitué par des oléfines halogénées et au moins un siloxane de formule (I) 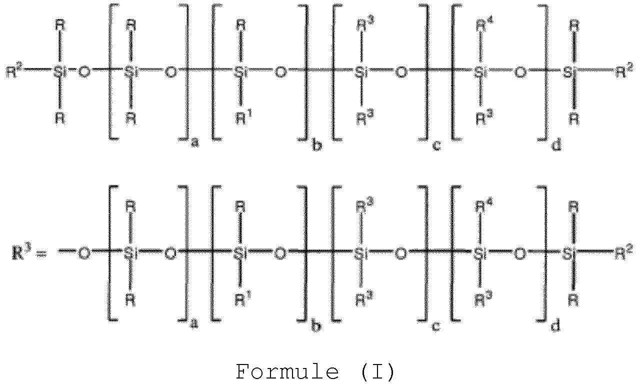 dans laquelle
a vaut, indépendamment l'un de l'autre, 1 à 150,
b vaut, indépendamment l'un de l'autre, 1 à 30,
c vaut, indépendamment l'un de l'autre, 0 à 5,
d vaut, indépendamment l'un de l'autre, 0 à 5,
à condition que, par molécule de formule (I), le nombre moyen ∑d des unités T et le nombre moyen ∑c des unités Q par molécule ne soient à chaque fois pas supérieur à 50, le nombre moyen ∑a des unités D par molécule ne soit pas supérieur à 2000 et le nombre moyen ∑b des unités siloxy portant R¹ par molécule ne soit pas supérieur à 100,
R représente un radical méthyle,
R² représente, indépendamment l'un de l'autre, R¹ ou R ;
R⁴ représente, indépendamment l'un de l'autre, un radical hydrocarboné saturé comprenant 1 à 20 atomes de carbone,
à condition qu'au moins un des substituants R¹, R² et/ou R⁴ ne représente pas R,
des siloxanes de (I) étant utilisés, dans lesquels R¹ représente, indépendamment l'un de l'autre, un radical organique choisi dans le groupe comprenant
-CH₂-CH₂-CH₂-O-(CH₂-CH₂O-)ₓ-(CH₂-CH(R')O-)_{y}-R" et/ou
-CH₂-CH₂-O-(CH₂-CH₂O-)ₓ-(CH₂-CH(R')O-)_{y}-R",
où
x vaut 0 à 100,
y vaut 0 à 100,
R' représente méthyle et
R" signifie, indépendamment l'un de l'autre, un radical hydrogène ou un groupe alkyle comprenant 1 à 4 atomes de carbone, un groupe -C(O)-R"' où R"' = radical alkyle, un groupe -CH₂-O-R', un groupe alkylaryle, le groupe-C(O)NH-R',
la proportion molaire d'unités oxyéthylène représentant au moins 70% des unités oxyalkylène, donc x/(x+y) >0,7, ou la proportion molaire d'unités oxyéthylène représentant au maximum 70% des unités oxyalkylène, donc x/(x+y) <0,7, et R" représentant un radical hydrogène.

2. Procédé pour la préparation de mousses de polyuréthane selon la revendication 1 avec utilisation d'agents gonflants constitués par des oléfines fluorées comme agent gonflant et des siloxanes de formule (I) dans laquelle
a vaut, indépendamment l'un de l'autre, 1 à 150,
b vaut, indépendamment l'un de l'autre, 1 à 30,
c vaut, indépendamment l'un de l'autre, > 0 à 4,
d vaut, indépendamment l'un de l'autre, > 0 à 4,
à condition que, par molécule de formule (I), le nombre moyen ∑d des unités T et le nombre moyen ∑c des unités Q par molécule ne soient à chaque fois pas supérieur à 20, le nombre moyen ∑a des unités D par molécule ne soit pas supérieur à 1500 et le nombre moyen ∑b des unités siloxy portant R¹ par molécule ne soit pas supérieur à 50.

3. Procédé selon au moins l'une quelconque des revendications 1 ou 2, au moins 10% des radicaux R² représentant R¹.

4. Procédé selon l'une quelconque des revendications 1 à 3, des siloxanes de formule (I) étant utilisés, dans lesquels en moyenne statistique au maximum 50%, de préférence au maximum 45%, de manière particulièrement préférée au maximum 40% du poids moléculaire moyen total du siloxane représentent la masse moléculaire totale de tous les radicaux R¹, le cas échéant différents.

5. Procédé selon l'une quelconque des revendications 1 à 4, R = méthyle et le quotient a/b valant au moins sept.

6. Procédé selon au moins l'une quelconque des revendications 1 à 5, y=0 dans R¹ et R" ne représentant pas hydrogène.

7. Procédé selon l'une quelconque des revendications 1 à 6, ∑c + ∑d étant < 1.

8. Procédé selon l'une quelconque des revendications 1 à 7, ∑c + ∑d étant ≥ 1.

9. Mousse de polyuréthane, préparée selon un procédé selon au moins l'une quelconque des revendications 1 à 8.

10. Mousse de polyuréthane selon la revendication 9, **caractérisée en ce qu'**elle est à cellules fermées.

11. Mousse de polyuréthane selon au moins l'une quelconque des revendications 9 ou 10, **caractérisée en ce que** la mousse de polyuréthane est une mousse dure de polyuréthane, une mousse souple de polyuréthane, une mousse viscoélastique, une mousse HR, une mousse de polyuréthane semi-dure, une mousse de polyuréthane thermoformable ou une mousse intégrale.

12. Utilisation des mousses de polyuréthane selon au moins l'une quelconque des revendications 9 à 11 dans et/ou comme isolation de réfrigérateur, panneaux d'isolation, éléments sandwich, isolations de tuyaux, mousse à pulvériser, mousse dosée à 1 et/ou 1,5 composant, imitation du bois, mousse pour modélisation, mousse d'emballage, matelas, rembourrage de meuble, rembourrage de siège de voiture, appuie-tête, tableau de bord, revêtement interne de voiture, ciel de voiture, matériau d'absorption du bruit, volant, semelle de chaussure, mousse pour face arrière de tapis, mousse de filtre, mousse d'étanchéité et adhésif ou pour la préparation des produits correspondants.
